# EUROPÄISCHE PATENTSCHRIFT

(11) **EP 2 839 193 B1**
(45) Veröffentlichungstag und Bekanntmachung des Hinweises auf die Patenterteilung: **19.12.2018**
(21) Anmeldenummer: 13704549.8
(22) Anmeldetag: 14.02.2013
(51) Int. Cl.: F16K 17/04, F16K 15/02

(54) **PNEUMATISCHES VENTIL**
PNEUMATIC VALVE
SOUPAPE PNEUMATIQUE

(30) Priorität: 18.04.2012 DE 102012007813
(43) Veröffentlichungstag der Anmeldung: 25.02.2015
(73) Patentinhaber: WABCO GmbH, 30453 Hannover (DE)
(72) Erfinder: EGGEBRECHT, Detlev, 30519 Hannover (DE); LINDHORST, Gabriele, 30451 Hannover (DE); PENDZICH, Kevin, 30161 Hannover (DE); REIMANN, Dennis, 30657 Hannover (DE)
(74) Vertreter: Lauerwald, Jörg
(86) Internationale Anmeldenummer: PCT/EP2013/000430
(87) Internationale Veröffentlichungsnummer: WO 2013/156097

(56) Entgegenhaltungen:
- DE-A1- 1 964 338
- DE-A1- 3 722 120
- DE-A1-102008 001 554
- DE-B3-102007 019 606

## Beschreibung

Die Erfindung betrifft ein pneumatisches Ventil, beispielsweise in einer Druckluftaufbereitungsanlage für Nutzkraftfahrzeuge, umfassend einen mit einem im wesentlichen kreisringförmigen Ventilsitz zusammenwirkenden Ventilkörper, dessen Oberseite von einer Druckfeder in Schließrichtung belastet ist und dessen Unterseite über einen zugeordneten Druckraum in Öffnungsrichtung druckbeaufschlagbar ist.

Derartige pneumatische Ventile werden in unterschiedlichen baulichen Ausgestaltungen beispielsweise als Druckbegrenzungsventile, Überströmventile, Rückschlagventile oder dergleichen etwa in Druckluftaufbereitungsanlagen für Nutzkraftfahrzeuge verwendet. Insbesondere bei solchen Ventilen mit einem großen Ventilsitzdurchmesser kann es beim Öffnungsvorgang zu Schwingungen des Ventilkörpers kommen, die nach außen als Geräusche wahrnehmbar sind und als Tuten, Brummen oder Knattern bezeichnet werden. Es ist schon vorgeschlagen worden, derartige Schwingungsbewegungen durch geeignete O-Ring-Dichtungen mit erhöhter Pressung und damit erhöhter Reibung zwischen feststehenden und bewegten Elementen des Ventils zu dämpfen. Eine höhere Reibung führt jedoch zu einer größeren Hysterese des Ventils, was zu einer Änderung seines Öffnungs- und Schließverhaltens führt. Außerdem kann die Reibung im Laufe der Zeit beispielsweise durch Verschleiß abnehmen, so dass sich der Öffnungs- und Schließdruck entsprechend verändert und es nach einer längeren Betriebszeit wieder zu Schwingungen kommen kann.

Bei Entlüftungsventilen beziehungsweise so genannten Purge-Ventilen ist auch schon vorgeschlagen worden, die zusammenwirkenden Konturen des Ventilkörpers und/oder des Ventilsitzes mit einer derartigen Geometrie zu versehen, dass sich beim Öffnen eine langsame Erhöhung der Nennweite des Durchströmungs-Querschnitts ergibt. Damit wird erreicht, dass der Durchströmungs-Querschnitt des Ventils sich beim Öffnen nur langsam vergrößert, so dass sich ein Gegendruck der Ventilkörperrückseite nicht schnell bzw. schlagartig aufbaut. Dadurch wird ein Überschwingen des Ventilkörpers vermieden. Es hat sich jedoch gezeigt, dass der Effekt nicht in jenem Ventil nicht groß genug ist, um ein Schwingen des Ventilkörpers sicher zu vermeiden.

Ein weiterer Vorschlag zur Lösung des oben genannten Problems besteht darin, dem Ventilkörper bzw. Ventilkolben einen zusätzlichen, durch O-Ringe abgetrennten Dämpfungsraum zuzuordnen. Bei vorgesteuerten Ventilen kann der Steuerraum gleichzeitig als Dämpfungsraum dienen. Bei anderen, nicht vorgesteuerten Ventilen ist ein zusätzlicher Dämpfungsraum jedoch mit einem konstruktiven und baulichen Mehraufwand verbunden.

Vor diesem Hintergrund liegt der Erfindung die Aufgabe zugrunde, ein pneumatisches Ventil zu schaffen, bei dem mit geringem konstruktiven Aufwand beim Öffnen des Ventils auftretende Schwingungen und damit verbundene Geräusche wirkungsvoll unterbunden werden.

Die Lösung dieser Aufgabe ergibt sich aus den Merkmalen des Hauptanspruches, während vorteilhafte Ausgestaltungen und Weiterbildungen der Erfindung den Unteransprüchen entnehmbar sind.

Der Erfindung liegt die Erkenntnis zugrunde, dass ein Überschwingen des Ventilkörpers und damit die oben beschriebenen Effekte unterbunden werden können, wenn der für die Funktion des Ventils vorgesehene Druck während eines Öffnungsvorganges desselben zumindest leicht abgeschwächt wirksam ist.

Demnach geht die Erfindung aus von einem pneumatischen Ventil, beispielsweise in einer Druckluftaufbereitungsanlage für Nutzkraftfahrzeuge, umfassend einen mit einem im wesentlichen kreisringförmigen Ventilsitz zusammenwirkenden Ventilkörper, dessen Oberseite von einer Druckfeder in Schließrichtung belastet ist und dessen Unterseite über einen zugeordneten Druckraum in Öffnungsrichtung druckbeaufschlagbar ist. Zur Lösung der genannten Aufgabe ist dabei vorgesehen, dass der Druckraum über eine bezüglich der Durchströmungsrichtung davor angeordnete Drosseleinrichtung mit der zugeordneten Druckmittelquelle verbunden ist.

Aus der DE 91 12 163 U1 ist zwar bereits ein Druckbegrenzungsventil bekannt, bei dem eine Drossel zur Verhinderung von Druckschwingungen vorgesehen ist. Es geht hier jedoch um Druckschwingungen, die von einer pulsierend fördernden Pumpe hervorgerufen werden.

Aus der DE 43 44 416 A1 ist eine Druckbegrenzungseinrichtung bekannt, bei der eine Drossel in der Wand einer Druckabbaukammer vorgesehen ist, die nicht zur Unterdrückung von Schwingungen dient, sondern einen übermäßig schnellen Druckabbau bei einer Leckage verhindern und einen Notdruck aufrechterhalten soll.

Solange bei der erfindungsgemäßen Anordnung das Ventil geschlossen ist, stellt sich im Druckraum über die Drosseleinrichtung der vor dem Ventil herrschende Vorratsdruck ein, welcher in Öffnungsrichtung wirkt. Wenn sich bei steigendem Vorratsdruck das Ventil öffnet, dann kann die Druckluft über den geöffneten Ventilsitz schneller entweichen, als über die Drosseleinrichtung Druckluft nachströmen kann. Dadurch nimmt der Druck im Druckraum gegenüber dem Vorratsdruck ab, so dass sich der Öffnungsvorgang verlangsamt. Damit werden ein Überschwingen des Ventilkörpers und die damit verbundenen, oben beschriebenen Effekte vermieden.

Die Drosseleinrichtung ist gemäß der Erfindung so ausgelegt sein, dass sie sich bei größerem Öffnungshub des Ventilkörpers weiter öffnet und eine größere Nennweite ermöglicht, so dass sie nur beim Öffnen, wo die Überschwingneigung am größten ist, als Drossel wirkt, später jedoch einen ungehinderten Druckaufbau im Druckraum ermöglicht, wie anhand eines Ausführungsbeispiels noch näher beschrieben wird.

Ein pneumatisches Ventil gemäß einer weit verbreiteten Bauart umfasst ein Ventilgehäuse oder dergleichen mit einem im Gehäuseinneren ausgebildeten Ventilsitz und mit einem im Ventilgehäuse axial geführten Ventilkolben mit einem tellerartigen Ventilkörper und einem an dessen Unterseite angeordneten Ventilschaft. Bei einem derartigen pneumatischen Ventil ist gemäß der Erfindung vorgesehen, dass der Druckraum als zwischen dem Ventilgehäuse und dem Ventilschaft ausgebildeter Ringraum gebildet ist, und dass die dem Druckraum vorgeordnete Drosseleinrichtung als zwischen Ventilgehäuse und Ventilschaft ausgebildeter Ringspalt gebildet ist. Der Druckraum und die Drosseleinrichtung werden durch eine geeignete Ausgestaltung des Ventilgehäuses und/oder des Ventilschaftes gebildet, so dass eine gesonderte Drosseleinrichtung nicht erforderlich ist. Der Ventilschaft kann selbst im Ventilgehäuse axial geführt sein und so eine kippsichere Bewegung des Ventilkolbens gewährleisten.

Gemäß der Erfindung ist vorgesehen, dass die geometrische Ausbildung des Ringspaltes so getroffen ist, dass sich dessen Durchströmquerschnittsfläche bei zunehmender Öffnungsbewegung des Ventilschaftes beziehungsweise mit zunehmender Öffnungsstellung desselben vergrößert. Dies kann durch eine entsprechende Profilierung des Ventilgehäuses oder des Ventilschaftes erreicht werden, wie anhand eines Ausführungsbeispieles dargestellt wird.

Entsprechend einer bevorzugten konstruktiven Ausgestaltung der Erfindung umfasst das Ventilgehäuse einen in ein Außengehäuse eingesetzten Profilring mit einem den Ventilsitz bildenden Axialflansch und einem den Ringspalt bildenden, radial nach innen zum Ventilschaft hin vorspringenden Ringwulst. Auf diese Weise kann der Ventilschaft selbst verhältnismäßig einfach ausgebildet sein, da der Ventilsitz und der Ringspalt durch eine entsprechende Ausgestaltung des Profilringes realisiert sind.

Gemäß einer weiteren Ausgestaltung der Erfindung ist an der Unterseite des Ventiltellers ein den Ventilschaft koaxial umgebender Axialflansch angeordnet, welcher den Druckraum gegenüber einem sekundären, nicht direkt mit dem Ventilsitz in Verbindung stehenden inneren Druckraum abtrennt. Im inneren Druckraum wirkt somit der gesamte Vorratsdruck in Öffnungsrichtung, so dass durch eine entsprechende Aufteilung der druckbeaufschlagten Flächen des Druckraumes einerseits und des inneren Druckraumes andererseits der oben beschriebene gewünschte Effekt beeinflusst werden kann.

Das pneumatische Ventil gemäß der Erfindung kann beispielsweise als ein Druckbegrenzungsventil, ein Überströmventil, ein Rückschlagventil oder als ein Bestandteil eines kombinierten Druckbegrenzer-Überströmventils ausgebildet sein. Ein solches Ventil kann in einer Druckluftaufbereitungsanlage für Nutzkraftfahrzeuge angeordnet sein.

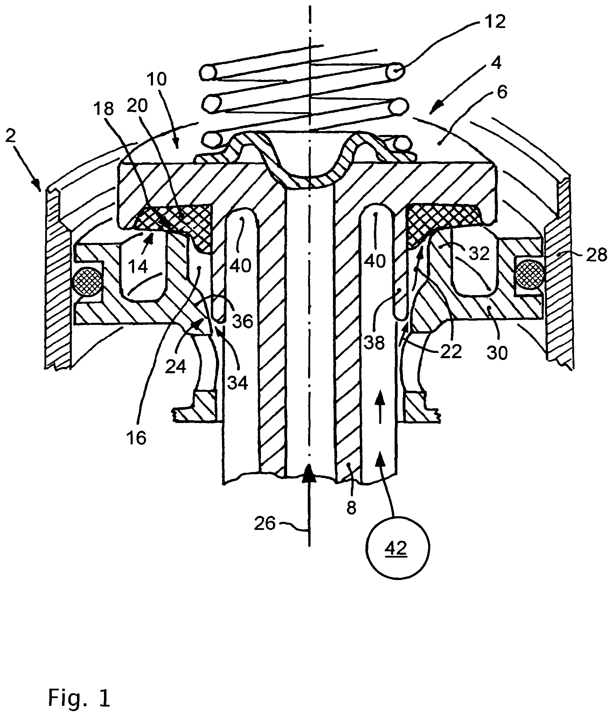

Die Erfindung lässt sich anhand eines Ausführungsbeispiels weiter erläutern. Dazu ist der Beschreibung eine Zeichnung beigefügt. In dieser zeigt die einzige Figur schematisch eine Teil-Schnittansicht eines pneumatischen Ventils.

Von dem in der Figur dargestellten pneumatischen Ventil sind aus Gründen eines einfacheren Verständnisses im wesentlichen nur die für die vorliegende Erfindung relevanten Bauteile dargestellt. Es umfasst ein Ventilgehäuse 2 und einen in diesem Ventilgehäuse 2 axial geführten Ventilkolben 4 mit einem tellerartigen Ventilkörper 6 und einem an dessen Unterseite 14 angeordneten Ventilschaft 8. Die Oberseite 10 des Ventiltellers 6 ist von einer Druckfeder 12 in Schließrichtung des Ventils belastet, und seine Unterseite 14 ist über einen zugeordneten Druckraum 16 in Öffnungsrichtung 26 druckbeaufschlagbar.

Der Ventilkörper 6 wirkt mit einem kreisringförmigen Ventilsitz 18 zusammen, und zwar über einen an dessen Unterseite angeordneten Dichtring 20 aus einem ElastomerMaterial.

Der Druckraum 16 ist über eine bezüglich der Durchströmungsrichtung 22 der Druckluft davor angeordnete Drosseleinrichtung 24 mit einer Druckmittelquelle 42 verbunden. Beim Öffnen des Ventils in Öffnungsrichtung 26 strömt die Druckluft aus dem Druckraum 16 schneller ab, als sie über die Drosseleinrichtung 24 nachströmen kann, wodurch ein Überschwingen des Ventilkörpers 6 und damit die weiter vorne geschilderten Effekte vermieden werden.

Wie die Figur zeigt, ist der Druckraum 16 als ein zwischen der Gehäusestruktur und dem Ventilschaft 8 ausgebildeter Ringraum ausgebildet, während die dem Druckraum 16 vorgeordnete Drosseleinrichtung 24 als ein zwischen der Gehäusestruktur und dem Ventilschaft 8 ausgebildeter Ringspalt konstruiert ist.

Die Gehäusestruktur umfasst im dargestellten Ausführungsbeispiel einen in ein Außengehäuse 28 eingesetzten Profilring 30 mit einem den Ventilsitz 18 bildenden Axialflansch 32 und einem den Ringspalt 34 bildenden, radial nach innen zum Ventilschaft 8 hin vorspringenden Ringwulst 36. Wie die Figur weiter erkennen lässt, ist in diesem Ausführungsbeispiel die geometrische Ausbildung des Ringspaltes 34 so getroffen, dass sich deren Durchströmquerschnittsfläche bei zunehmender Öffnungsbewegung des Ventils bzw. des Ventilschaftes 8 in Öffnungsrichtung 26 zunehmend vergrößert. Zu diesem Zweck weicht der Ringwulst 36 in Öffnungsrichtung 26 radial nach außen zurück, so dass sich bei einer Bewegung des Ventils in Öffnungsrichtung 26 der Abstand zwischen dem Ventilschaft und dem Ringwulst 36 vergrößert und damit einen ständig größer werdenden Querschnitt freigibt. Der Ringspalt 34 wirkt daher nur zu Beginn des Öffnungsweges des Ventils als Drossel.

Der Ringspalt 34 kann bei anderen Ausführungsformen über den gesamten Öffnungsweg oder nur den Anfang des Öffnungsweges des Ventils zylindrisch ausgebildet sein.

An der Unterseite des Ventilkörpers 6 ist ein den Ventilschaft 8 koaxial umgebender Axialflansch 38 angeordnet, welcher den Druckraum 16 gegenüber einem sekundären, nicht direkt mit dem Ventilsitz 18 in Verbindung stehenden inneren Druckraum 40 abtrennt. Wie bereits weiter vorne beschrieben wurde, herrscht in diesem inneren Druckraum 40 immer der volle Druck der Druckmittelquelle 42, so dass der über die Drosseleinrichtung 24 bewirkte beabsichtigte Effekt nur im Bereich des Druckraumes 16 erzeugt wird. Über das konstruktiv bestimmbare Flächenverhältnis zwischen Druckraum 16 und innerem Druckraum 40 kann der vorne beschriebene gewünschte Effekt beeinflusst werden.

Bevorzugt ist das Ventil gemäß der Erfindung derartig ausgebildet, dass es in seiner vollständigen Öffnungsstellung im Bereich des Ringspalts 34 und des Druckraums 16 an der durchströmenden Druckluft keinen wesentlichen Staudruck erzeugt. Dies ist beispielsweise erreichbar, wenn der Axialflansch 38 des Ventilschaftes 8 in der vollständigen Öffnungsstellung des Ventils nicht mehr im axialen Bereich des Ringwulstes 36 angeordnet ist.

Das in der einzigen Figur dargestellte Ventil kann ein Überströmventilteil eines kombinierten Druckbegrenzer-Überströmventils sein, wobei dessen Druckbegrenzerteil nicht gesondert dargestellt ist und konventionell ausgebildet sein kann.

### Bezugszeichenliste (Bestandteil der Beschreibung)

- 2: Ventilgehäuse
- 4: Ventilkolben
- 6: Ventilkörper
- 8: Ventilschaft
- 10: Oberseite
- 12: Druckfeder
- 14: Unterseite
- 16: Druckraum
- 18: Ventilsitz
- 20: Dichtring
- 22: Durchströmungsrichtung
- 24: Drosseleinrichtung
- 26: Öffnungsrichtung
- 28: Ventilgehäuse, Außengehäuse
- 30: Profilring
- 32: Axialflansch
- 34: Ringspalt
- 36: Ringwulst
- 38: Axialflansch
- 40: Innerer Druckraum
- 42: Druckmittelquelle

## Patentansprüche

1. Pneumatisches Ventil, umfassend ein Ventilgehäuse (28,30) mit einem im Gehäuseinneren ausgebildeten im wesentlichen kreisringförmigen Ventilsitz (18) und mit einem im Ventilgehäuse axial geführten Ventilkolben (4) mit einem tellerartigen Ventilkörper (6) und einem an dessen Unterseite (14) angeordneten Ventilschaft (8), wobei der Ventilsitz (18) mit dem Ventilkörper (6) zusammenwirkt, wobei die Oberseite (10) des Ventilkörpers (6) von einer Druckfeder (12) in Schließrichtung belastet ist und dessen Unterseite (14) über einen zugeordneten Druckraum (16) in Öffnungsrichtung (26) druckbeaufschlagbar ist, wobei der Druckraum (16) über eine bezüglich der Durchströmungsrichtung (22) davor angeordnete Drosseleinrichtung (24) mit einer zugeordneten Druckmittelquelle (42) verbunden ist, wobei der Druckraum (16) als ein zwischen dem Ventilgehäuse (28,30) und dem Ventilschaft (8) ausgebildeter Ringraum gebildet ist, wobei die dem Druckraum (16) vorgeordnete Drosseleinrichtung (24) als zwischen dem Ventilgehäuse (28,30) und dem Ventilschaft (8) ausgebildeter Ringspalt (34) gebildet ist, und wobei die geometrische Ausbildung des Ringspaltes (34) so getroffen ist, dass sich dessen Durchströmquerschnittsfläche bei zunehmender Öffnungsstellung des Ventilschaftes (8) zunehmend vergrößert.

2. Pneumatisches Ventil nach Anspruch 1, **dadurch gekennzeichnet, dass** das Ventilgehäuse (28,30) einen in ein Außengehäuse (28) eingesetzten Profilring (30) mit einem den Ventilsitz (18) bildenden Axialflansch (32) und einem den Ringspalt (34) bildenden, radial nach innen zum Ventilschaft (18) hin vorspringenden Ringwulst (36) umfasst.

3. Pneumatisches Ventil nach Anspruch 1 oder 2, **dadurch gekennzeichnet, dass** an der Unterseite des Ventilkörpers (6) ein den Ventilschaft (8) koaxial umgebender Axialflansch (38) angeordnet ist, welcher den Druckraum (16) gegenüber einem sekundären, nicht direkt mit dem Ventilsitz (16) in Verbindung stehenden inneren Druckraum (40) abtrennt.

4. Pneumatisches Ventil nach einem der Ansprüche 1 bis 3, **dadurch gekennzeichnet, dass** dieses derartig ausgebildet ist, dass es in seiner vollständigen Öffnungsstellung im Bereich des Ringspalts (34) und des Druckraums (16) an der durchströmenden Druckluft keinen wesentlichen Staudruck erzeugt.

5. Pneumatisches Ventil nach einem der Ansprüche 1 bis 4, **dadurch gekennzeichnet, dass** dieses als ein Druckbegrenzungsventil, ein Überströmventil, ein Rückschlagventil oder als ein kombiniertes Druckbegrenzer-Überströmventil ausgebildet ist.

6. Druckluftaufbereitungsanlage für Nutzkraftfahrzeuge mit einem pneumatischen Ventil nach einem der Ansprüche 1 bis 5.

## Claims

1. Pneumatic valve, comprising a valve housing (28, 30) with a substantially circularly annular valve seat (18) which is configured in the housing interior, and with a valve piston (4), which is guided axially in the valve housing, with a disc-like valve body (6) and a valve stem (8) which is arranged on its underside (14), the valve seat (18) interacting with the valve body (6), the upper side (10) of the valve body (6) being loaded in the closing direction by a compression spring (12), and it being possible for its underside (14) to be pressurized in the opening direction (26) via an associated pressure space (16), the pressure space (16) being connected to an associated pressure medium source (42) via a throttle device (24) which is arranged upstream of it with regard to the throughflow direction (22), the pressure space (16) being formed as an annular space which is configured between the valve housing (28, 30) and the valve stem (8), the throttle device (24) which is arranged upstream of the pressure space (16) being formed as an annular gap (34) which is configured between the valve housing (28, 30) and the valve stem (8), and the geometric configuration of the annular gap (34) being made in such a way that its throughflow cross-sectional area enlarges increasingly as the open position of the valve stem (8) increases.

2. Pneumatic valve according to Claim 1, **characterized in that** the valve housing (28, 30) comprises a profile ring (30) which is inserted into an outer housing (28), with an axial flange (32) which forms the valve seat (18) and an annular bead (36) which forms the annular gap (34) and projects radially inwards towards the valve stem (18).

3. Pneumatic valve according to Claim 1 or 2, **characterized in that** an axial flange (38) which surrounds the valve stem (8) coaxially is arranged on the underside of the valve body (6), which axial flange (38) separates the pressure space (16) with respect to a secondary inner pressure space (40) which is not connected directly to the valve seat (16).

4. Pneumatic valve according to one of Claims 1 to 3, **characterized in that** it is configured in such a way that, in its completely open position, it does not generate any substantial dynamic pressure on the compressed air which flows through in the region of the annular gap (34) and the pressure space (16).

5. Pneumatic valve according to one of Claims 1 to 4, **characterized in that** it is configured as a pressure relief valve, an overflow valve, a check valve or as a combined pressure relief/overflow valve.

6. Compressed air preparation system for commercial vehicles having a pneumatic valve according to one of Claims 1 to 5.

## Revendications

1. Soupape pneumatique, comprenant un boîtier de soupape (28, 30) avec un siège de soupape (18) essentiellement en forme de bague circulaire, réalisé à l'intérieur du boîtier, et avec un piston de soupape (4) guidé axialement dans le boîtier de soupape, avec un corps de soupape (6) de type coupelle et avec une tige de soupape (8) disposée au niveau de son côté inférieur (14), le siège de soupape (18) coopérant avec le corps de soupape (6), le côté supérieur (10) du corps de soupape (6) étant sollicité dans la direction de fermeture par un ressort de compression (12) et son côté inférieur (14) pouvant être sollicité en pression dans la direction d'ouverture (26) par le biais d'un espace de pression associé (16), l'espace de pression (16) étant connecté par le biais d'un dispositif d'étranglement (24) disposé avant celui-ci, par rapport à la direction d'écoulement (22), avec une source de fluide sous pression associée (42), l'espace de pression (16) étant réalisé sous la forme d'un espace annulaire réalisé entre le boîtier de soupape (28, 30) et la tige de soupape (8), le dispositif d'étranglement (24) placé avant l'espace de pression (16) étant réalisé sous la forme d'une fente annulaire (34) réalisée entre le boîtier de soupape (28, 30) et la tige de soupape (8), et la réalisation géométrique de la fente annulaire (34) étant telle que sa surface en section transversale d'écoulement augmente de manière croissante dans le cas d'une position d'ouverture croissante de la tige de soupape (8).

2. Soupape pneumatique selon la revendication 1, **caractérisée en ce que** le boîtier de soupape (28, 30) comprend une bague profilée (30) insérée dans un boîtier extérieur (28), avec une bride axiale (32) formant le siège de soupape (18) et un bourrelet annulaire (36) formant la fente annulaire (34), faisant saillie radialement vers l'intérieur vers la tige de soupape (18).

3. Soupape pneumatique selon la revendication 1 ou 2, **caractérisée en ce qu'**une bride axiale (38) entourant coaxialement la tige de soupape (8) est disposée au niveau du côté inférieur du corps de soupape (6), laquelle bride axiale sépare l'espace de pression (16) par rapport à un espace de pression secondaire interne (40) n'étant pas en liaison directe avec le siège de soupape (16).

4. Soupape pneumatique selon l'une quelconque des revendications 1 à 3, **caractérisée en ce que** celle-ci est réalisée de telle sorte que, dans sa position d'ouverture complète, elle ne produise essentiellement aucune pression dynamique dans la région de la fente annulaire (34) de l'espace de pression (16) sur l'air comprimé s'écoulant à travers.

5. Soupape pneumatique selon l'une quelconque des revendications 1 à 4, **caractérisée en ce que** celle-ci est réalisée sous forme de soupape de limitation de pression, de soupape de surpression, de clapet antiretour ou sous forme d'une combinaison d'une soupape de surpression et d'un limiteur de pression.

6. Installation de fourniture d'air comprimé pour des véhicules utilitaires, comprenant une soupape pneumatique selon l'une quelconque des revendications 1 à 5.
